Europäisches Patentamt

European Patent Office

Office européen des brevets

(11) Veröffentlichungsnummer: **0 051 107**
**B1**

(12) **EUROPÄISCHE PATENTSCHRIFT**

(45) Veröffentlichungstag der Patentschrift:
**03.10.84**

(21) Anmeldenummer: **81104995.6**

(22) Anmeldetag: **27.06.81**

(51) Int. Cl.³: **B 60 P 7/13,** E 05 C 1/06

(54) Vorrichtung zum insbesondere stirnseitigen Verriegeln von Containern.

(30) Priorität: **11.10.80 DE 3038461**

(43) Veröffentlichungstag der Anmeldung:
**12.05.82 Patentblatt 82/19**

(45) Bekanntmachung des Hinweises auf die Patenterteilung:
**03.10.84 Patentblatt 84/40**

(84) Benannte Vertragsstaaten:
**FR GB IT**

(56) Entgegenhaltungen:
**DE - A - 2 822 710**
**FR - A - 2 397 503**
**GB - A - 1 523 863**

(73) Patentinhaber: **Gerd Schulz Fahrzeug- und Container-Technik, Besselstrasse 9, D-2100 Hamburg 90 (DE)**

(72) Erfinder: **Schulz, Gerd, Besselstrasse 9, D-2100 Hamburg 90 (DE)**
Erfinder: **Hartleif, Hans-Peter, Rotbergskamp 20c, D-2100 Hamburg 90 (DE)**

(74) Vertreter: **Eisenführ & Speiser, Martinistrasse 24, D-2800 Bremen 1 (DE)**

**Beschreibung**

Die Erfindung betrifft eine Vorrichtung zum insbesondere stirnseitigen Verriegeln von Containern an Fahrgestellen (Stirnverriegelung), mit einem Riegelbolzen, der in einer Führung etwa parallel zur Längsachse des Fahrgestells zwischen einer Riegel- und einer Freigabestellung bewegbar und an einen in einer Halterung schwenkbaren Betätigungsgriff angekoppelt ist.

Vorrichtungen dieser Art sind seit langem bekannt. Sie werden anstelle von vertikal bewegbaren Container-Verriegelungen insbesondere an den vorderen Stirnseiten von Sattelauflieger-Fahrgestellen eingesetzt. Die Riegelbolzen derartiger Stirnverriegelungen sind horizontal zwischen ihrer Freigabe- und der Riegelstellung bewegbar. Sie nehmen die nach oben und die seitlich gerichteten Kräfte des Containers auf, während die in und entgegen der Fahrtrichtung wirkenden Kräfte anderweitig abgeleitet werden. Diese Stirnverriegelungen haben den Vorteil, dass sie die Bauhöhe unterhalb des Fahrgestells — im Gegensatz zu den üblichen Twistlock-Verschlüssen — nicht beeinträchtigen. Der Nachteil der bekannten Stirnverriegelungen lag im wesentlichen in den hohen Kosten von Reparaturen dieser Verriegelungen und zu einem Teil auch an ihren vergleichsweise hohen Gestehungskosten.

Der Erfindung lag deshalb die Aufgabe zugrunde, die bekannten Stirnverriegelungen dahingehend zu verbessern, dass Gestehungs- und Einbaukosten sowie die Kosten eventueller Reparaturen möglichst gesenkt bzw. durch steigende Lohnkosten allenfalls unterproportional beeinflusst werden. Gelöst wird diese Aufgabe erfindungsgemäss dadurch, dass Führung und Halterung gemeinsam an einer senkrecht zur Bewegungsebene des Betätigungsgriffes ausgerichteten Montageplatte fest angeordnet sind und dass sich die Montageplatte auf derjenigen Seite der Führung befindet, die dem verriegelten Teil des Riegelbolzens zugekehrt ist.

Diese Lösung hat den grossen Vorzug, dass die Stirnverriegelungen nunmehr unabhängig vom Betrieb und Betriebsablauf des Fahrzeugherstellers erzeugt werden können und vom Fahrzeughersteller nur noch am Fahrzeug befestigt werden müssen. Besonders nützlich für den Fahrzeughersteller ist dabei, dass der Montageaufwand drastisch reduziert wird, weil er in der unten noch beschriebenen Weise lediglich ein einziges Bauteil, d.h. also die gesamte Stirnverriegelung, dem Fahrgestell anpassen muss, wobei selbst diese Arbeit noch wesentlich einfacher als bei den Verriegelungen des Standes der Technik ist.

In der bevorzugten Ausführungsform der Erfindung ist vorgesehen, dass die Führung, die Halterung und die Montageplatte integrale Bestandteile eines Gehäuses sind, aus dem der Riegelbolzen mindestens in seiner Verriegelungsstellung herausragt.

Bevorzugte weitere Ausgestaltungen der Erfindung sind in den Unteransprüchen genannt sowie im Detail weiter unten erwähnt.

Die Erfindung ist nachstehend anhand des in der Zeichnung dargestellten bevorzugten Ausführungsbeispiels näher erläutert.

Es zeigen:

Fig. 1 eine Draufsicht auf die Stirnverriegelung;

Fig. 2 eine Ansicht der Vorrichtung in Richtung der Pfeile II-II in Fig. 1; und

Fig. 3 eine Seitenansicht der Vorrichtung in Richtung der Pfeile III-III in Fig. 1.

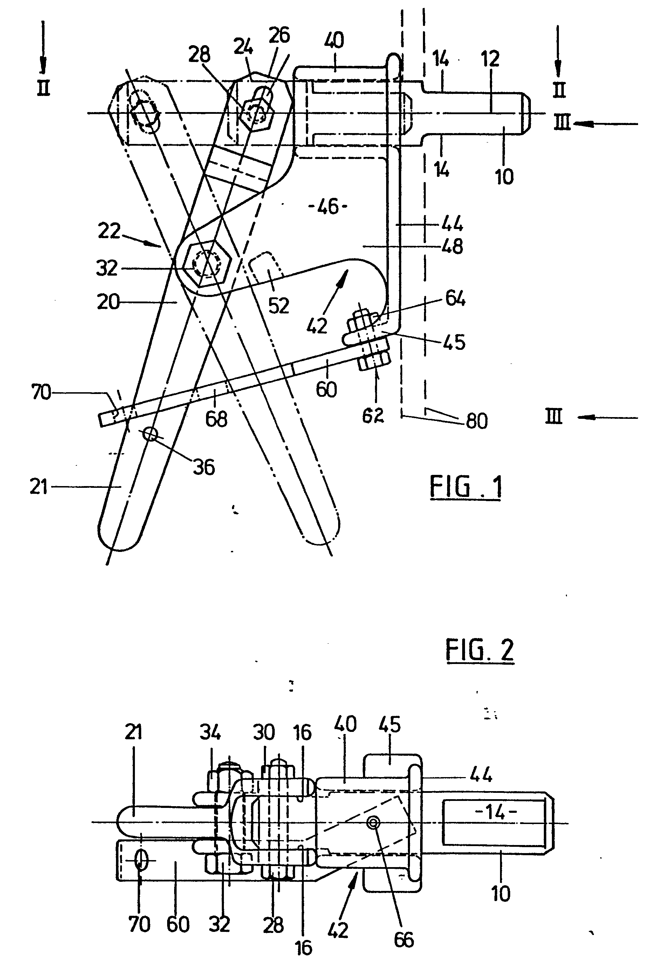

Die Vorrichtung weist als verriegelndes Element einen Riegelbolzen 10 auf, der mit Hilfe eines schwenkbaren Betätigungsgriffes 20 in Richtung seiner Längsachse 12 bewegbar ist. In Fig. 1 sind der Riegelbolzen 10 und der Betätigungsgriff 20 mittels ausgezogener Linien in ihrer Verriegelungsstellung und mittels strich-punktierter Linien in ihrer Freigabestellung dargestellt.

Im Ausführungsbeispiel ist der Riegelbolzen 10 grundsätzlich zylindrisch ausgebildet, er weist jedoch im Bereich seiner beiden Enden je zwei Abflachungen 14, 16 auf. Die beiden stirnseitigen Abflachungen 14 des Riegelbolzens 10 verlaufen im eingebauten Zustand der Vorrichtung vertikal und in Fig. 1 senkrecht zur Zeichenebene. Der diese Abflachungen 14 aufweisende Teil des Riegelbolzens 10 ist sein Riegelbereich.

Zwischen den Abflachungen 14 und 16 durchsetzt der Riegelbolzen 10 eine zylindrisch gebohrte oder gegossene Führungsbuchse 40, die ein integraler Bestandteil eines geschweissten oder gegossenen Gehäuses 42 ist. Zu diesem Gehäuse 42 gehören weiterhin eine den Abflachungen 14 des Riegelbolzens 10 zugekehrte Montageplatten 44 und ein Abschnitt 46, der einerseits ein Lager 22 für den Betätigungsgriff 20 trägt und andererseits eine versteifende Verbindung zwischen der Führungsbuchse 40 und der Montageplatte 44 bildet.

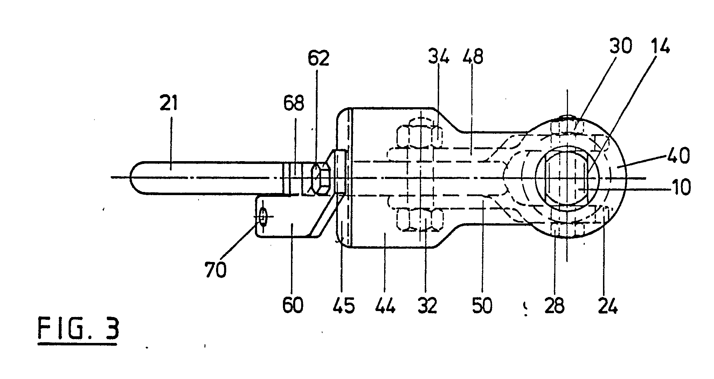

Im Ausführungsbeispiel besteht der Abschnitt 46 aus zwei senkrecht zur Montageplatte 44 und mit Abstand sowie parallel zueinander verlaufenden Wänden 48, 50 (siehe insbesondere Fig. 3). In der Nähe des Lagers 22 sind die beiden Wände durch einen Steg 52 verbunden, der lediglich in Fig. 1 mit gestrichelten Linien dargestellt ist.

Der Betätigungsgriff 20 ist als Doppelhebel ausgebildet. Sein dem Riegelbolzen 10 zugekehrtes Ende ist gabelförmig, wie Fig. 2 erkennen lässt. Die beiden Abschnitte der Gabel 24 sind von je einem Langloch 26 durchsetzt, das sich in Längsrichtung des Betätigungsgriffes 20 erstreckt. Die Gabel 24 des Betätigungsgriffes 20 umgreift das rückwärtige Ende des Riegelbolzens 10 im Bereich von dessen hinteren Abflachungen 16, durch die hindurch im übrigen eine Querbohrung verläuft. Ein Bolzen 28 durchsetzt sowohl diese Querbohrung als auch die beiden Langlöcher 26 der Gabel 24, wodurch Betätigungsgriff 20 und Riegelbolzen 10 miteinander gekoppelt werden. Eine auf den Bolzen 28 aufgeschraubte Mutter 30 dient der Sicherung der Kopplung. Der Vollständigkeit halber sei darauf hingewiesen, dass die Ebenen der Abflachungen 16 senkrecht zu den Ebenen der Abflachungen 14 des Riegelbolzens 10 verlaufen.

Der Betätigungsgriff 20 ist durch den Zwischenraum zwischen den beiden Wänden 48, 50 des Gehäuseabschnittes 46 hindurchgeführt und am Gehäuse mittels des Lagers 22 schwenkbar gehalten. Dieses Lager 22 wird von einem Lagerbolzen 32 gebildet, der durch zwei, die Wände 48, 50 senkrecht durchsetzende Bohrungen und eine entsprechende Bohrung des Betätigungsgriffes 20 hindurchgesteckt und mit Hilfe einer Mutter 34 gesichert ist. Der freie Teil des Betätigungsgriffes 20 bildet einen Handgriff 21. Durch ein Verschwenken des Handgriffes 21 wird der gesamte Betätigungsgriff 20 um das Lager 22 herum verschwenkt, so dass auf diese Weise der Riegelbolzen 10 aus seiner Verriegelungsstellung in seine — strichpunktiert gezeigte — Freigabestellung bewegt werden kann. Begrenzt wird diese Schwenkbewegung in der Verriegelungsstellung dadurch, dass die Gabel 24 gegen die hintere Stirnseite der Führungsbuchse 40 stösst und in der Freigabestellung dadurch, dass sich der Betätigungsgriff 20 gegen den im Gehäuseabschnitt 46 vorgesehenen Steg 52 legt.

Zur Sicherung der Stellung des Betätigungsgriffes — und damit zur Sicherung der Stellung des Riegelbolzens — ist ein Sperrhebel 60 vorgesehen. An seinem einen Ende ist er mittels eines Bolzens 62 und einer Mutter 64 schwenkbar an einer seitlichen Abkröpfung 45 der Montageplatte 44 angelenkt und erstreckt sich von dort in Richtung auf den Betätigungsgriff 20 etwas über dessen Verriegelungsstellung hinaus, wie sich aus den Fig. 1 und 2 ergibt. Durch seine Lagerung an der Abkröpfung 45 ist der Sperrhebel 60 um eine Horizontalachse 66 schwenkbar. Diese Horizontalachse liegt in derselben Ebene wie die Längsachse 12 des Riegelbolzens 10, wie den Fig. 2 und 3 entnehmbar ist.

Zum besseren Verständnis der Funktion des Sperrhebels 60 muss zunächst auf die amerikanische Darstellungsweise der Zeichnungsfiguren aufmerksam gemacht werden: Die Darstellung der Vorrichtung gemäss Fig. 1 entspricht der Einbausituation der Vorrichtung am nicht dargestellten Fahrgestell. Die Köpfe der Bolzen 28, 32 befinden sich hierbei auf der Oberseite der Vorrichtung. Bei Betrachtung der Vorrichtung entsprechend der Pfeile II-II in Fig. 1 und nach dem Umklappen in die Blattebene auf den Betrachter zu entsteht die Ansicht gemäss Fig. 2, die lediglich aufgrund des beschriebenen Umklappens in die Zeichnungsebene den — fälschlichen — Eindruck erweckt, als lägen die Köpfe der Bolzen 28, 32 nunmehr auf der Unterseite der Vorrichtung. Sie liegen tatsächlich vielmehr nach wie vor oben.

Demgemäss verläuft aber auch der Sperrhebel 60 über die Oberseite des Betätigungsgriffes 20 hinweg. Der Sperrbolzen 60 ist gemäss Fig. 2 leicht gekröpft, so dass sein längerer Teil etwa parallel zur Ebene des Betätigungsgriffes 20 verläuft. Im Bereich dieses längeren Teils des Sperrhebels 60 ist eine Sperrnase 68 vorgesehen. Wenn der Sperrhebel 60 seine Position gemäss den Fig. 2 und 3 einnimmt, ragt diese Sperrnase in den Schwenkweg des Betätigungsgriffes 20 hinein. In Fig. 1 ist zu ersehen, dass die Lage und die Abmessungen der Sperrnase 68 so gewählt sind, dass sie mit ihrer einen Kante den Betätigungsgriff 20 in der Verriegelungsstellung und mit ihrer anderen Kante in der Freigabestellung sperrt. Wird der Sperrhebel 60 angehoben, gelangt die Sperrnase 68 aus dem Weg des Betätigungsgriffes 20, so dass dieser verschwenkt werden kann.

Der Sperrhebel 60 fällt im übrigen unter Schwerkrafteinfluss in seine Sperrstellung. Als zusätzliche Sicherung für diese Sperrstellung sind im Handgriff 21 des Betätigungsgriffes 20 und im Bereich des freien Endes des Sperrhebels 60 je eine Bohrung 36 bzw. 70 vorgesehen, durch die ein Ringsplint oder ein anderes Sicherungselement zur gegenseitigen Lagesicherung hindurchführbar ist.

Die beschriebene Stirnverriegelung wird als komplette Baueinheit — üblicherweise — am vorderen Ende eines Container-Chassis, insbesondere eines Sattelaufliegers so angeschweisst, dass der Riegelbolzen 10 in horizontaler Richtung von vorn aus in die übliche stirnseitige Bohrung eines Container-Eckbeschlages eingeführt werden kann. Zu Montagezwecken ist am Container-Chassis vorn eine vertikal stehende massive Platte angeordnet, die Teil eines quer zum Chassis verlaufenden Trägers sein kann und im Bereich der Aufsetzstelle des Container-Eckbeschlages einen horizontal verlaufenden Durchbruch mit Abmessungen besitzt, durch die der Riegelbolzen von vorn nach hinten hindurchgeschoben werden kann. Die Dicke dieser Platte entspricht etwa dem Abstand zwischen der Montageplatte 44 der Vorrichtung und dem Beginn der Abflachungen 14 des Riegelbolzens 10. Zwei gestrichelte Linien 80 in Fig. 1 deuten diese Platte an, die zusammen mit den im hinteren Bereich des Chassis befindlichen Verriegelungen die beim Bremsen entstehenden Kräfte aufnimmt.

Vor dem Aufsetzen eines Containers auf ein Chassis muss sich der Riegelbolzen 10 in seiner strichpunktiert dargestellten Freigabestellung befinden. Ist der Container auf dem Chassis positioniert, werden der Sperrhebel 60 angehoben und der Handgriff 21 (in Fig. 1 nach links) geschwenkt. Während der Schwenkbewegung gelangt der vordere Teil des Riegelbolzens 10 in die Stirnbohrung des Container-Eckbeschlages hinein. In der Endstellung wird dann der Sperrhebel 60 losgelassen, so dass er den Betätigungsgriff 20 in der Sperrstellung verriegelt.

Die Montage der Stirnverriegelung ist denkbar einfach. Ihre erforderliche Position gegenüber dem Chassis ist durch den erwähnten Durchbruch innerhalb der Platte 80 vorgegeben. Es brauchen zur Montage deshalb lediglich der Riegelbolzen 10 durch den vorerwähnten Durchbruch der Platte 80 hindurchgeschoben und die Montageplatte 44 gegen die Stirnseite der Platte 80 gelegt zu werden, worauf nur noch ein Schweissvorgang zur Verbindung des Gehäuses 42 mit dem Container-Chassis erforderlich ist.

### Patentansprüche

1. Vorrichtung zum insbesondere stirnseitigen Verriegeln von Containern an Fahrgestellen (Stirnverriegelung), mit einem Riegelbolzen (10), der in einer Führung (40) etwa parallel zur Längsachse des Fahrgestells zwischen einer Riegel- und einer Freigabestellung bewegbar und an einen in einer Halterung (46) schwenkbaren Betätigungsgriff (20) angekoppelt ist, dadurch gekennzeichnet, dass Führung (40) und Halterung (46) gemeinsam an einer senkrecht zur Bewegungsebene des Betätigungsgriffes (20) ausgerichteten Montageplatte (44) fest angeordnet sind und dass sich die Montageplatte auf derjenigen Seite der Führung befindet, die dem verriegelnden Teil des Riegelbolzens (10) zugekehrt ist.

2. Vorrichtung nach Anspruch 1, dadurch gekennzeichnet, dass die Führung (40), die Halterung (46) und die Montageplatte (44) integrale Bestandteile eines Gehäuses (42) sind, aus dem der Riegelbolzen (10) mindestens in seiner Verriegelungsstellung herausragt.

3. Vorrichtung nach Anspruch 2, dadurch gekennzeichnet, dass das Gehäuse (42) ein Gussteil ist.

4. Vorrichtung nach einem der Ansprüche 1 bis 3, dadurch gekennzeichnet, dass die Halterung (46) von zwei mit Abstand parallel zueinander und senkrecht zur Montageplatte (44) verlaufenden Wänden (48, 50) gebildet ist und ein Lager (22) für den Betätigungsgriff (20) aufweist.

5. Vorrichtung nach Anspruch 4, dadurch gekennzeichnet, dass die Wände (48, 50) in einem Bereich zwischen der Montageplatte (44) und dem Lager (22) durch einen Steg (52) miteinander verbunden sind, der einen Anschlag für den Betätigungsgriff (20) in dessen Freigabestellung bildet.

6. Vorrichtung nach einem der Ansprüche 1 bis 5, dadurch gekennzeichnet, dass an dem dem Riegelbolzen (10) abgekehrten Endbereich der Montageplatte (44) eine Lagerung für einen Sperrhebel (60) vorgesehen und dieser Sperrhebel in und ausser Eingriff mit dem Betätigungsgriff (20) bringbar ist.

7. Vorrichtung nach Anspruch 6, dadurch gekennzeichnet, dass der Sperrhebel (60) in einer Ebene bewegbar ist, die senkrecht auf der Bewegungsebene des Betätigungsgriffes (20) steht.

8. Vorrichtung nach einem der Ansprüche 1 bis 7, dadurch gekennzeichnet, dass die Montageplatte (44) mit einer Platte, einem Hohlprofil oder dgl. des Fahrgestells verschraubbar ist.

## Claims

1. Means intended more especially for the frontal locking of containers on trucks (front locking), with a locking bolt (10), which is movable in a guideway (40) approximately parallel to the longitudinal axis of the truck between a locking position and a release position and is coupled to an actuating handle (20) swivellable in a mounting (46), wherein the guideway (40) and mounting (46) are jointly arranged fast on a mounting plate (44) arranged perpendicular to the plane of movement of the actuating handle (20) and wherein the mounting plate is disposed on that side of the guideway which is facing the locking part of the locking bolt (10).

2. Means according to Claim 1, wherein the guideway (40), the mounting (46) and the mounting plate (44) are integral components of a housing (42), from which the locking bolt (10) projects, at least in its locking position.

3. Means according to Claim 2, wherein the housing (42) is a casting.

4. Means according to one of the Claims 1 to 3, wherein the mounting (46) is formed by two walls (48, 50) which extend parallel to one another in spaced relation and perpendicular to the mounting plate (44) and comprises a bearing (22) for the actuating handle (20).

5. Means according to Claim 4, wherein the walls (48, 50) are connected to one another by a web (52) in a region between the mounting plate (44) and the bearing (22), said web forming a stop for the actuating handle (20) in its release position.

6. Means according to one of Claims 1 to 5, wherein a mounting for a locking lever (60) is provided on that end region of the mounting plate (44) which is remote from the locking bolt (10) and this locking lever is able to be brought into and out of engagement with the actuating handle (20).

7. Means according to Claim 6, wherein the locking lever (60) is movable in a plane which is at right-angles to the plane of movement of the actuating handle (20).

8. Means according to one of the Claims 1 to 7, wherein the mounting plate (44) can be screwed to a plate, a hollow section member or the like of the truck.

## Revendications

1. Dispositif, en particulier pour verrouiller la face frontale de conteneurs placés sur des châssis (verrouillage frontal), comprenant un boulon de verrouillage (10) qui est mobile dans un guide (40) de façon sensiblement parallèle à l'axe longitudinal du châssis entre une position de verrouillage et une position de libération, et est accouplé avec une poignée de commande (20) pivotant dans une fixation (46), caractérisé en ce que le guide (40) et la fixation (46) sont disposés conjointement de manière fixe sur une plaque de montage (44) dirigée perpendiculairement au plan de déplacement de la poignée de commande (20) et en ce que la plaque de montage se trouve sur le côté du guide qui est tourné vers la partie de verrouillage du boulon de verrouillage (10).

2. Dispositif selon la revendication 1, caractérisé en ce que le guide (40), la fixation (46) et la plaque de montage (44) sont des éléments constitutifs intégrés d'un carter (42), hors duquel fait saillie le boulon de verrouillage (10), au moins dans sa position de verrouillage.

3. Dispositif selon la revendication 2, caractérisé en ce que le carter (42) est une pièce moulée.

4. Dispositif selon l'une des revendications 1 à 3, caractérisé en ce que la fixation (46) est formée par deux parois (48, 50) s'étendant à distance parallèlement entre elles et perpendiculairement à la plaque de montage (44), et comporte un palier (22) pour la poignée de commande (20).

5. Dispositif selon la revendication 4, caractérisé en ce que les parois (48, 50) sont assemblées entre elles, dans une zone située entre la plaque de montage (44) et le palier (22), par une nervure (52) constituant une butée pour la poignée de commande (20) dans sa position de libération.

6. Dispositif selon l'une des revendications 1 à 5, caractérisé en ce qu'un palier pour un levier d'arrêt (60) est prévu dans la zone d'extrémité de la plaque de montage (44) située à l'opposé du boulon de verrouillage (10), ce levier d'arrêt pouvant être mis en et hors de prise avec la poignée de commande (20).

7. Dispositif selon la revendication 6, caractérisé en ce que le levier d'arrêt (60) est mobile dans un plan perpendiculaire au plan de déplacement de la poignée de commande (20).

8. Dispositif selon l'une des revendications 1 à 7, caractérisé en ce que la plaque de montage (44) peut être assemblée par boulonnage avec une plaque, un profilé creux ou similaire du châssis.

FIG .1

FIG. 2

FIG. 3

0 051 107